Europäisches Patentamt

European Patent Office

Office européen des brevets

(11) Veröffentlichungsnummer: **0 285 161 B1**

(12) **EUROPÄISCHE PATENTSCHRIFT**

(19)

(45) Veröffentlichungstag der Patentschrift: **12.02.92**

(51) Int. Cl.⁵: **A47J 36/02**

(21) Anmeldenummer: **88105271.6**

(22) Anmeldetag: **31.03.88**

(54) **Kochgefaess mit nicht haftendem Belag.**

(30) Priorität: **03.04.87 IT 1998587**

(43) Veröffentlichungstag der Anmeldung:
**05.10.88 Patentblatt 88/40**

(45) Bekanntmachung des Hinweises auf die
Patenterteilung:
**12.02.92 Patentblatt 92/07**

(84) Benannte Vertragsstaaten:
**AT BE CH DE ES FR GB GR IT LI LU NL SE**

(56) Entgegenhaltungen:
EP-A- 0 117 801          WO-A-81/00972
AT-B- 371 686            DE-A- 1 454 212
DE-A- 2 827 461          FR-A- 1 536 889
GB-A- 1 180 704

(73) Patentinhaber: **BALLARINI PAOLO & FIGLI
S.p.A.
Via Risorgimento, 3
I-46017 Rivarolo Mantovano (MN)(IT)**

(72) Erfinder: **Ferron, Francesco
Via Risorgimento, 3
I-46017 Rivarolo Mantovano (MN)(IT)**
Erfinder: **dell'Asta, Massimo
Via Risorgimento, 3
I-46017 Rivarolo Mantovano (MN)(IT)**
Erfinder: **Ballarini, Guido
Via Risorgimento, 3
I-46017 Rivarolo Mantovano (MN)(IT)**

(74) Vertreter: **Mayer, Hans Benno, Dipl.-Ing.
de Dominicis & Mayer Piazzale Marengo 6
I-20121 Milano(IT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorstehende Erfindung betrifft ein Kochgefaess, das mit einer Antihaftschicht auf der Innenflaeche des Gefaessbodens auf der Grundlage von Politetratfluorethylen (PTFE) vesehen ist, das mit Metallpulver oder Mineralpulver gefuellt ist. Unter dem Ausdruck Kochgefaess sind allgemein Kochgefaesse fuer den Kuechengebrauch sowohl in Aluminium als auch in Stahl in Form von Toepfen, Pfannen und Kasserolen zu verstehen.

Bei bekannten Gefaessen, die eine Antihaftschicht aufweisen, ist eine innere Beschichtung aus einer Harzschicht vorgesehen, die auch ueblicherweise als Primer bezeichnet wird, und das Festlegen der Antihaftschicht am Gefaesskoerper erleichtert. Ueber die Primerschicht wird eine Schicht aus PTFE gelegt, die mit metallischen Teilchen, z.B. Aluminium oder haeufiger Mineralteilchen, wie z.B. Glimmer, Quarz oder Cheramikteilchen gefuellt ist, wobei ueber diese Schicht eine Endbeschichtung meistens aus reinem PTFE aufgebracht wird.

Die Antihafteigenschaften der z.B. unter den Handelsnamen "Teflon" bekannt gewordenen Erzeugnisse werden dem Kochgefaess ueber die auesserste PTFE-Schicht, die im wesentlichen rein aufgetragen wird, verliehen, wogegen die innere gefuellte Schicht eine aushaertende Schicht darstellt, die den mechanischen Belastungen standhaelt, z.B. waehrend des Reinigungsvorganges, dem die Topfinnenseite ausgesetzt wird. Dadurch wird eine rasche Abnutzung der Antihaftschicht vermieden.

Die bekannten Kochtoepfe weisen den Nachteil auf, dass die Antihaftschicht eine aeusserst geringe Widerstandsfaehigkeit gegen Reib- und Schmirgelkraefte aufweist, besonders gegen Schmirgelkraefte, die von schneidenden Metallgegenstaenden oder Gegenstaenden mit scharfen Kanten herruehren, dies aufgrund der Tatsache, dass die Fuellung fuer die aushaertende Schicht ueblicherweise auf eine Groessenordnung von 2 - 5 Gewichtsprozent beschraenkt ist, um eine gute Haftung zu erzielen.

Die Verwendung hoeherer Prozentsaetze fuer die Fuellstoffe, um die Widerstandsfaehigkeit der Antihaftschicht hinsichtlich Abnuetzung zu erhoehen, wuerde zu einer verminderten Haftung dieser Schutzschicht am Topfboden fuehren und die Lebensdauer der Antihaftschicht, waere in nicht denkbarer Weise zu kurz.

Die in der Antihaftschicht erzeugten Kratzer und Furchen fuehren rasch zu einem Abloesen von Teilstuecken der aufgetragenen Antihaftschicht. Dieses Losloesen wird noch durch die Saeuberungsvorgaenge beschleunigt, da waehrend des Reinungsvorganges des Kochgefaesses die Haftung zwischen Gefaessboden und Antihaftschicht auch auf der Innenseite angegriffen wird.

Aus den geschilderten Gruenden ist die Antihaftschicht in den bekannten Kochgefaessen als Kompromissloesung anzusehen, es werden keine zufriedenstellenden Ergebnisse hinictlich Widerstandsfaehigkeit der Beschichtung gegen Reib- und Schmirgekraefte erzielt und keine Moeglichkeit geschaffen, die Antihaftschicht in zufriedenstellender Weise am Innenboden des Kochgefaesses zu verankern und gute Antihafteigenschaften fuer die aufgetragene Schicht zu erzielen, Eigenschaft, die mit der Zunahme an Fuellstoffen in der PTFE-Schicht abnimmt.

Aus der Vorveroeffentlichung FR-A-1.536.889 ist eine Antihaftschicht aus Polytetrafluoraethylen (PTFE) bekannt geworden. Um hier die Eigenschaften der Antihaftschicht zu verbessern, wurde vorgeschlagen, in die Antihaftschicht Kleine Glaskugeln einzubetten, um anschliessend dieses Gefuege durch Aufbringen einer Deckschicht aus Polytetrafluoraethylen zu glaetten.

Bei dieser bekannten Ausfuehrungsform verbleiben im Antihaftbelag punkt- oder kalottenartige Erhebungen, die zu einer unerwuenschten Unebenheit des Bodens fuehren. Desweiteren ist die Deckschicht im oberen Bereich der Kugel sehr duenn. Dies fuehrt bei Verwendung eines Kuechenwerkzeuges, z.B. eines Schabers, sehr bald zum Freilegen der Kugeloberseite, was nach laengerem Gebrauch des Kochgefaesses und oefterem Einwirken auf die Antihaftschicht zu einem Ausbrechen der kleinen Glaskugeln und zur Bildung kraterartiger Oeffnungen fuehrt mit der Folge, dass die Antihaftwirkung vollstaendig aufgehoben wird.

Aufgabe der vorstehenden Erfindung ist es ein Kochgefaess vorzuschlagen, dass eine Antihaftschicht aufweist, die besonders widerstandsfaehig gegen Reib- und Schmirgelkraefte und andere Einflussgroessen im allgemeinen ist, wobei die Schicht einen hohen Prozentsatz eines aushaertenden Fuellers aufweist, ohne dass dabei die Antihaftwirkung im Inneren des Kochgefaesses nachteilig beeinflusst wird.

Diese Aufgabe wird nach der Erfindung durch ein Kochgefaess mit einer aus mehreren Lagen bestehenden Antihaftbeschichtung auf der Basis von Polytetrafluoraethylen dadurch geloest, dass auf den Boden und die Seitenwand des Kochgefaesses eine Primerschicht aufgebracht ist, dass auf die Primerschicht eine Lage aus reinem oder gefuelltem Polytetrafluoraethylen aufgebracht ist, dass auf diese Schicht eine nicht flaechendeckende, mit 5-20 Gewichtsprozent Fuellmaterial angereicherte Armierung aus Polytetrafluoraethylen aufgebracht ist und die Armierung mit einer Schicht aus reinem PTFE oder einer mit 2-5 Gewichtsprozent Fuellmaterial angereicherten Schicht aus PTFE abgedeckt ist.

Unter dem Ausdruck "Verstaerkung" ist eine flaechige Anordnung zu verstehen, die nicht flaechendeckend ausgebildet ist, sondern z.B. als Netzgebilde, als inselartige Struktur oder in Form von konzentrischen Kreisen oder aehnlichen Gebilden.

Weitere vorteilhafte Ausgestaltungen der Erfindung sind gegenstand der Ansprüche 2 - 7.

Die Erfindung wird nun unter Bezugnahme auf einige Ausfuehrungsbeispiele beschrieben und in den Zeichnungen dargestellt:

Fig. 1 zeigt einen Teilquerschitt eines Kochgefaesses mit der erfindungsgemaessen Beschichtung, und

Fig. 2 - 4 zeigen weitere Ausfuehrungsvarianten fuer eine stark gefuellte Antihaftstruktur.

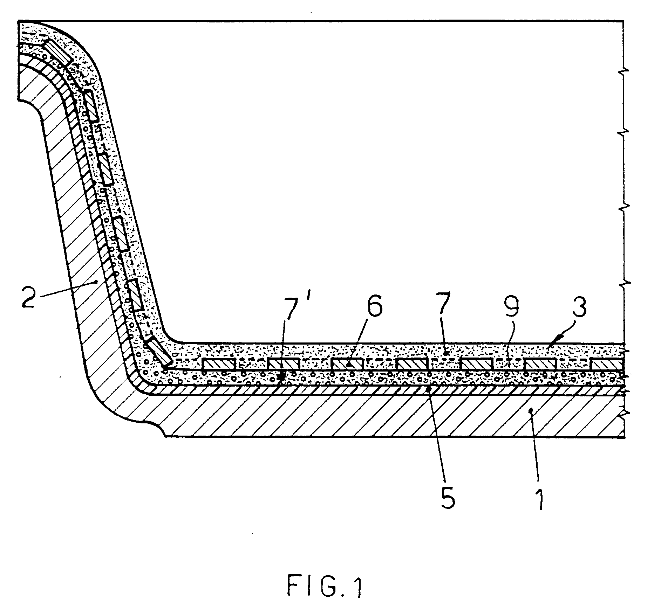

Unter Bezugnahme auf Fig. 1 sind der Boden 1 und die Seitenwandungen 2 eines Kochgefaesses, z.B. aus Aluminium, mit einer Antihaftschicht 3 beschichtet. Die Antihaftschicht besteht aus einer Primerschicht 5 und einer Schicht 7 aus PTFE, die eine Armierung aus laenglichen Elementen 6, 9 aufweist, die netzartig angeordnet sind und aus PTFE bestehen, mit einem Fuellungsgrad zwischen 10 und 15 Gewichtsprozent aufweist, z.B. unter Verwendung von Metallpulver. Die Elemente 6, 9 die das Netzwerk bilden, sind auf gegenseitigem Abstand angeordnet, der groesser oder gleich ihrer Breite ist. Die Elemente 6, 9 koennen sich rechtwinklig ueberkreuzen oder die Ueberkreuzung erfolgt unter Einschluss anderer Winkel. Die Antihaftschicht 3 kann auf folgende Weise hergestellt werden:

Zu Behandlungsbeginn wird eine Primerschicht 5 aufgetragen, die geeignete Dicke aufweist und ueblicherweise duenn ausgebildet ist. Die Ausgestaltung der Primerschicht ist von den Merkmalen des zu behandelnden Materials abhaengig. Die Primerschicht kann z.B. aufgespritzt und im Anschluss getrocknet werden. Die als Primer geeigneten Materialien werden unter verschiedenen Handelsnamen und von verschiedenen Herstellern (Hoechst, Corsel, Tecnomax) vertrieben und entsprechend den Anweisungen des Herstellers in unterschiedlicher Schichtstaerke von 3 - 4 μm bis ca. 7 μm aufgetragen. Im Anschluss wird eine Schicht aus reinem PTFE mit einer Schichtdicke von ca. 5 μm aufgetragen; diese Schicht koennte auch leicht gefuellt sein.

Das Auftragen kann durch Spritzvorgang mit anschliessendem Trocknungsvorgang erfolgen. Auf diese Haftschicht wird im Anschluss eine Schicht mit der Dicke von 7 - 8 μm aufgetragen, um die Verankerungselemente 6, 9 zu schaffen, der Auftrag erfolgt z.B. ueber Siebdruckverfahren.

Die Armierungsschicht wird durch Auftrag von PTFE gebildet, das von 10 bis 15 Gew.-% mit Metallpulver oder Mineralpulver gefuellt ist, und diese Armierung wird, wie bereits ausgesagt, im Siebdruckverfahren hergestellt. Im Anschluss daran erfolgt der Auftrag einer weiteren PTFE-Schicht in reiner Form oder in nur leicht gefuellter Form mit einer Schichtdicke von 8 bis 10 μm, was zu einem Auskleiden der Hohlraeume zwischen den Armierungselementen 6 und 9 und einem Einbetten und Abdecken dieser Elemente fuehrt.

Es erfolgt anschliessend eine Waermebehandlung der Beschichtung in der Art, dass eine innige Verbindung zwischen den einzelnen Bestandteilen erfolgt, um eine Armierung 6, 9 zu erhalten, die vollstaendig in die PTFE-Schicht aus reinem PTFE oder nur leicht gefuelltem PTFE eingebettet ist. Als Alternativvorschlag koennte die Armierungsschicht 6, 9 auch ueber bekannte Abziehbilder aufgetragen werden.

Wenn die Antihaftschicht an einem bereits vorgeformten Gefaess anzubringen ist, so ist es vorteilhaft, die Antihaftschicht nicht an den Seitenwaenden vorzusehen; diese Seitenwaende werden waehrend des Spritzvoranges durch geeignete Abdeckungen abgeschirmt.

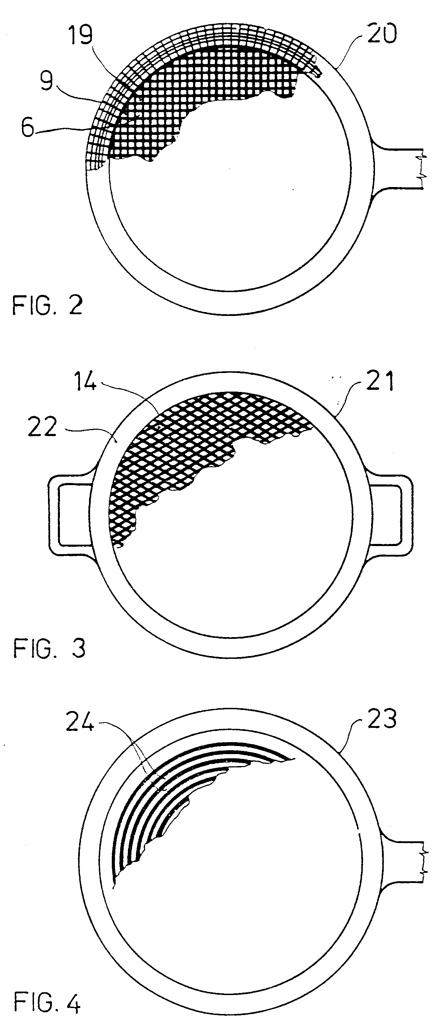

In Fig. 2 ist eine Draufsicht auf das Kochgefaess 20 dargestellt, das z.B. der Ausfuehrungsform nach Fig. 1 entspricht, in der die Armierungselemente 6, 9 rechtwinklig im Schnitt angeordnet sind und inselartige Flaechenstuecke 19 bilden, die sich auch an den Seitenwaenden des Kochgefaesses fortsetzen.

Bei der Ausfuehrungsform nach Fig. 3 sind die Armierungsteile zur Bildung des Netzwerkes gegeneinander geneigt angeordnet, und bilden somit inselartige Flaechen, die rautenartige Form 14 aufweisen. In diesem Fall wird die Antihaftschicht nicht an den Seitenwaenden 22 des Kochgefaesses 21 vorgesehen.

Bei der Ausfuehrungsform nach Fig. 4 ist das Kochgefaess 23 an seinem Boden mit einer Armierung versehen, die aus konzentrischen Ringen 24 besteht, die nicht miteinander in Beruehrung kommen.

Aus der vorangegangen Beschreibung kann entnommen werden, dass durch die Erfindung ein Kochgefaess mit einer besonders widerstandsfaehigen Antihaftschicht gegen Reib- und Kraftwirkung gebildet wird. Dabei ist eine erhebliche Fuellung des PTFE an oertlich konzentrierter Stelle vorgesehen und somit wird der Beschichtung eine erhebliche Widerstandfaehigkeit gegen Reib- und Schmirgelkraefte verleiht, ohne dabei die eigentliche Antihaftwirkung der Beschichtung negativ zu beeinflussen.

Im Durchschnitt weist die erfindungsgemaesse Beschichtung die gleiche Menge PTFE auf, wie diese bei bekannten Kochgefaessen aufgetragen wird. Die Qualitaet der Beschichtung nimmt jedoch zu, besonders was die Widerstandsfaehigkeit gegen Reib- und Schmirgelkraefte sowie die gewuenschte Antihaftwirkung betrifft.

Die groessere Konzentration der Fuellung an oertlich verschiedenen Stellen, die jedoch in unmittelbarer Naehe zueinander vorgesehen sind, gibt der Beschichtung eine hohe Widerstandskraft in Bezug auf die gesamte vorgesehene Fuellung, ferner kann die Oberflaechenbeschichtung aus reinem PTFE gebildet sein, dadurch ist eine groesstmoegliche Antihaftwirkung erzieltbar.

Ein weitere Vorteil des erfindungsgemaessen Kochgefaesses ist darin zu sehen, dass die Struktur der Antihaftschicht deutlich, auch mit blossem Auge erkenntlich ist, was einen Qualitaetshinweis derart darstellt, dass eine Antihaftschicht vorliegt, die aus gefuelltem PTFE besteht. Dies war bei bekannten Kochgefaessen nicht der Fall, durch Inaugenscheinnahme bestand nicht die Moeglichkeit festzustellen, ob die Beschichtung tatsaechlich Antihaftwirkung hatte oder aus einer imitierten Beschichtung bestand.

**Patentansprüche**

1. Kochgefaess, mit einer aus mehreren Lagen bestehenden Antihaftbeschichtung (5,6,7',7) auf der Basis von Polytetrafluoraethylen (PTFE)
**dadurch gekennzeichnet,**
dass auf den Boden (1) und die Seitenwand (2) des Kochgefaesses eine Primerschichte (5) aufgetragen ist, dass auf die Primerschicht (5) eine Lage (7') aus reinem oder gefuelltem Polytetrafluoraethylen aufgebracht ist, dass auf diese Schicht eine nicht flaechendeckende, mit 5-20 Gewichtsprozent Fuellmaterial angereicherte Armierung (6) aus Polytetrafluoraethylen aufgebracht ist und diese Armierung (6) mit einer Schicht (7) aus reinem PTFE oder einer mit 2-5 Gewichtsprozent Fuellmaterial angereicherten Schicht aus PTFE abgedeckt ist.

2. Kochgefaess, nach Patentanspruch 1, **dadurch gekennzeichnet,** dass die Armierung (6,14) netzartig ausgebildet ist.

3. Kochgefaess, nach Patentanspruch 1, **dadurch gekennzeichnet,** dass die Armierung (24) aus konzentrisch angeordneten Ringlinien besteht.

4. Kochgefaess, nach Patentanspruch 1, **dadurch gekennzeichnet,** dass die Schichten aus Polytetrafluoraethylen mittels Spritzverfahren aufgebracht werden.

5. Kochgefaess, nach Patentanspruch 1, **dadurch gekennzeichnet,** dass die Armierung (6,14,24) mittels Siebdruckverfahren aufgebracht wird.

6. Kochgefaess, nach Patentanspruch 1, **dadurch gekennzeichnet,** dass die Armierung (6,14,24) durch Auflegen eines Abziehbildes aufgebracht wird.

**Claims**

1. Cooking vessel, having a non-stick coating (5,6,7',7) based on polytetrafluoroethylene (PTFE) and comprising a plurality of layers, characterised in that a primer coat (5) is applied to the bottom (1) and the side wall (2) of the cooking vessel, in that a layer (7') of pure or filled polytetrafluoroethylene is applied to the primer coat (5), in that a non surface-covering reinforcement (6) of polytetrafluoroethylene, enriched with 5-20 per cent by weight, is applied to this coat and this reinforcement (6) is covered by a coat (7) of pure PTFE or a coat of PTFE enriched with 2-5 per cent by weight of filling material.

2. Cooking vessel according to patent claim 1, characterised in that the reinforcement (6,14) is of a net-like form.

3. Cooking vessel according to patent claim 1, characterised in that the reinforcement (24) comprises concentrically arranged annular lines.

4. Cooking vessel according to patent claim 1, characterised in that the coats of polytetrafluoroethylene are applied by means of spraying methods.

5. Cooking vessel according to patent claim 1, characterised in that the reinforcement (6,14,24) is applied by means of screen-printing methods.

6. Cooking vessel according to patent claim 1, characterised in that the reinforcement (6,14,24) is applied by laying on a transfer image.

**Revendications**

1. Récipient de cuisson avec une enduction anti-adhérence (5, 6, 7',7) se composant de plusieurs couches, à base de polytétrafluoroéthylène (PTFE)
caractérisé en ce que
sur le fond (1) et la paroi latérale (2) du récipient de cuisson est appliquée une première couche (5), sur la première couche (5) est appliquée une couche (7') en polytétrafluoroéthylène pur ou chargé, sur cette couche est appliquée une armature (6) ne couvrant pas toute la surface, enrichie à 5 à 20% en poids d'une matière de charge en polytétrafluoroéthylène et cette armature (6) est couverte d'une couche (7) en PTFE pur ou en une couche de PTFE enrichi de 2-5% en poids d'une matière de charge.

2. Récipient de cuisson selon la revendication 1, caractérisé en ce que l'armature (6, 14) est configurée en réseau.

3. Récipient de cuisson selon la revendication 1, caractérisé en ce que l'armature (24) se compose de lignes annulaires concentriques.

4. Récipient de cuisson selon la revendication 1, caractérisé en ce que les couches en polytétrafluoroéthylène sont appliquées au pistolet.

5. Récipient de cuisson selon la revendication 1, caractérisé en ce que l'armature (6, 14, 24) est appliquée par sérigraphie.

6. Récipient de cuisson selon la revendication 1, caractérisé en ce que l'armature (6, 14, 24) est appliquée par mise en place d'une image de décalcomanie.

FIG. 1

FIG. 2

FIG. 3

FIG. 4